## Europäisches Patentamt

## European Patent Office

## Office européen des brevets

(11) Veröffentlichungsnummer: **0 169 996**
**B1**

(12) # EUROPÄISCHE PATENTSCHRIFT

(45) Veröffentlichungstag der Patentschrift:
**12.07.89**

(51) Int. Cl.⁴: **A 01 K 7/06**

(21) Anmeldenummer: **85106336.2**

(22) Anmeldetag: **23.05.85**

(54) **Selbsttränkevorrichtung für Stalleinrichtungen auf Seeschiffen.**

(30) Priorität: **09.06.84 DE 3421664**

(43) Veröffentlichungstag der Anmeldung:
**05.02.86 Patentblatt 86/6**

(45) Bekanntmachung des Hinweises auf die Patenterteilung:
**12.07.89 Patentblatt 89/28**

(84) Benannte Vertragsstaaten:
**GB IT NL**

(56) Entgegenhaltungen:
**DE-A-2 457 913**
**DE-C-819 934**
**DE-C-929 647**
**US-A-3 144 003**

(73) Patentinhaber: **Bohse, Johann, Bahnhofstrasse 168a Postfach 11 05, D-2992 Dörpen- Ems (DE)**

(72) Erfinder: **Bohse, Johann, Bahnhofstrasse 168a Postfach 11 05, D-2992 Dörpen- Ems (DE)**

(74) Vertreter: **Busse & Busse Patentanwälte, Postfach 1226, D-4500 Osnabrück (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 169 996 B1

## Beschreibung

Die Erfindung betrifft eine Selbsttränkevorrichtung für Stalleinrichtungen auf Seeschiffen mit den im Oberbegriff des Patentanspruchs 1 angegebenen Merkmalen.

Bei bekannten Selbsttränkevorrichtungen dieser Art, die vor allem für den Schiffstransport von Schafen oder auch Schweinen bestimmt sind, werden die langgestreckten, im Grundriß ein schmales Rechteck beschreibenden Wassertröge, aus denen eine größere Anzahl von Tieren gleichzeitig trinken kann, über eine sog. Schwimmersteuerung mit Wasser versorgt. Das heißt, ein in Abhängigkeit vom Wasserstand im Wassertrog bewegter Schwimmkörper dient als Betätigungsorgan zum Öffnen des an die Druckwasserleitung angeschlossenen Ventils. Für auf Seeschiffen installierte Stalleinrichtungen hat sich eine derartige, die selbsttätige Wasserversorgung der Tröge ermöglichende Schwimmersteuerung vor allem deshalb als unbefriedigend erwiesen, weil sie die Tröge mit zuviel Wasser anfüllt, so daß bei stärkeren Schwankungen des Schiffes das Wasser ausschwappt, und weil sie bei starken Schiffsschwankungen häufig zu einer Überfüllung der Wassertröge führt und außerdem störanfällig ist.

Für stationäre Stalleinrichtungen sind Selbsttränkevorrichtungen bekannt (vgl. z. B. DE-C-819 934), bei denen das Wasserbecken als runde oder ovale Schale ausgebildet ist, deren Größe so bemessen ist, daß in der Regel jeweils nur ein Tier daraus trinken kann. Die das Tränkebecken bildende Schale aus z. B. Gußeisen oder Stahlblech weist einen Rückenteil auf, womit sie an einer vertikalen Wand oder an einem vertikalen Pfosten der Stalleinrichtung unter Anschluß an eine Druckwasserleitung befestigt werden kann. In dem Rückenteil befindet sich ein nach vorne, d.h. zur Schale hin, öffnendes Ventil, und als Betätigungsorgan ist eine am Rückenteil angebrachte, von dem sich in die Schale neigenden Tierkopf zu betätigende Druckplatte vorgesehen. Derartige Selbsttränkevorrichtungen, auch Selbsttränkebecken genannt, sind vornehmlich für Rinder bestimmt und geeignet.

Im Zusammenhang mit solchen, jeweils nur von einem Tier zu benutzenden Selbsttränkebecken ist es bekannt (US-A-3 144 003), ein Ventil zu verwenden, das einen Auslaßstutzen mit einem daraus vorstehenden und von einem elastischen Schlauchstück übergriffenen Öffnungsdorn aufweist, der bei seitlicher Auslenkung das Ventil öffnet.

Aufgabe der Erfindung ist es, für auf Seeschiffen installierte Stalleinrichtungen eine zuverlässige arbeitende und eine bedarfsgerechte Wasserversorgung der Tiere ermöglichende Tränkevorrichtung zu schaffen.

Hierzu sieht die Erfindung eine Selbsttränkevorrichtung mit den im Patentanspruch 1 angegebenen Merkmalen vor. Weitere Merkmale und Einzelheiten der Erfindung sind in den Ansprüchen 2 bis 5 angegeben.

Die Erfindung schafft für langgestreckte, im Grundriß ein schmales Rechteck beschreibende Wassertröge eine Selbsttränkevorrichtung, die eine zuverlässige Wasserversorgung jeweils einer größeren Anzahl von Tieren ermöglicht und unabhängig von jeglichen Schiffsschwankungen eine stets nur bedarfsgerechte Füllung der Wassertröge gewährleistet, so daß es kein überfließendes oder überschwappendes Wasser in den Lauf- bzw. Bedienungsgängen mehr gibt und insgesamt eine beträchtliche Wassereinsparung erreicht wird.

Nachstehend wird ein in der Zeichnung dargestelltes Ausführungsbeispiel des Gegenstands der Erfindung näher beschrieben; in der Zeichnung zeigen:

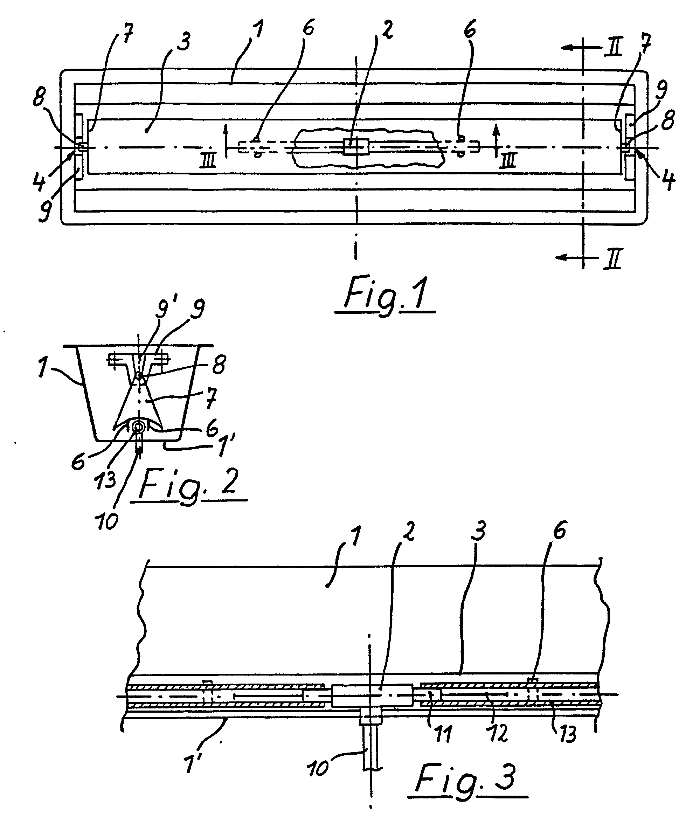

Fig. 1 eine Draufsicht, bereichsweise aufgebrochen, einer erfindungsgemäßen Selbsttränkevorrichtung;

Fig. 2 einen Querschnitt nach Linie II - II in Fig. 1;

Fig. 3 einen Teil-Längsschnitt nach Linie III - III in Fig. 1.

Ein vorzugsweise aus Kunststoff bestehender langgestreckter Wassertrog 1, der im Grundriß ein schmales bzw. flaches Rechteck beschreibt, weist als Betätigungsorgan für ein an eine Druckwasserleitung angeschlossenes und im Trog 1 befindliches Ventil 2 eine Schwinge 3 auf, die den Wassertrog 1 in Längsrichtung durchzieht und an dessen beiden Schmalseiten jeweils bei 4 schwenkbeweglich gelagert ist. Die Schwinge 3 erstreckt sich mit nur geringem Abstand oberhalb des Trogbodens 1' und bildet einen Hohlraum aus, in dem das am Trogboden vorgesehene Ventil 2 nach oben verdeckt aufgenommen ist. In zweckmäßiger Ausgestaltung ist dabei die Schwinge 3 als eine im Querschnitt nach oben gewölbte Rinne ausgebildet und weist an ihrer Unterseite hängend vorgesehene Ventil-Betätigungsglieder, z. B. in Form von Stiften bzw. Fingern 6, auf.

An ihren beiden Stirnenden ist die Schwinge 3 mit vertikal nach oben hochstehenden Aufhänge-Ansätzen 7 versehen, an deren oberen Ende jeweils ein rechtwinklig nach außen abstehender Lagerzapfen 8 angebracht ist. Mit diesen Lagerzapfen 8 ist die Schwinge 3 in an den Innenwänden der beiden Schmalseiten des Wassertroges 1 angebrachten, z. B. angeschraubten oder angeklebten Lagerstücken 9 aus Metall oder Kunststoff aufgehängt und schwenkbeweglich gelagert. Die Schwinge 3 ist damit als Pendelschwinge ausgebildet. Zweckmäßig sind die Lagerstücke 9 mit einem sich konisch nach oben erweiternden Aufnahmeschlitz 9' für den jeweiligen Zapfen 8 versehen, so daß die Schwinge 3 im ganzen aus dem Wassertrog 1 nach oben aushebbar bzw. von oben her in den Trog lose einhängbar ist. Die Schwinge 3 mit ihren Ventil-Betätigungsfingern 6, ihren Aufhänge-Ansätzen 7 und den Lagerzapfen 8 kann aus Metall oder Kunststoff bestehen, wobei herstellungstechnisch für die jeweils benötigte Länge von etwa 1,50 m eine Ausführung als geschweißte Blechkonstruktion aus z. B. Alu-Blech besonders zweckmäßig ist.

Das im Trogboden 1' mittig zur Troglänge angeordnete und mit einem den Trogboden durchsetzenden Stutzen 10 an eine Druckwasserleitung angeschlossene Ventil 2 ist handelsüblicher Bauart. Es weist zwei in Längsrichtung des Troges 1 sich erstreckende Wasserauslaßstutzen 11 auf, aus denen ein Ventil-Öffnungsdorn 12 horizontal nach außen vorsteht. Ein auf den Wasserauslaß-Stutzen 11 aufgeschobenes und dort fixiertes elastisches Schlauchstück 13 erstreckt sich über den Ventil-Öffnungsdorn 12 bis in den Bereich der an der Schwinge 3 unterseitig vorgesehenen Betätigungsfinger 6. Dabei sind die Länge des vorstehenden Öffnungsdorns 12, die Länge und Steifigkeit des Schlauchstücks 13, der Anbringungsort der Finger 6 an der Unterseite der Schwinge 3 und deren Gewicht insgesamt so aufeinander abgestimmt, daß auch bei einem Verschwenken des Wassertrogs 1 um bis zu 45° aus seiner Horizontallage und die damit sich ergebende Pendelrückstellkraft noch keine seitliche Auslenkung des Schlauchstücks 13 durch die Schwinge 3 und deren Finger 6 bewirkt, d.h. auch der Ventil-Öffnungsdorn 12 noch keine das Ventil 2 freigebende bzw. öffnende Verlagerung aus seiner horizontalen Schließstellung erfährt.

Auf diese Weise ist sichergestellt, daß es erst einer größeren, vom Kopf eines oder mehrerer Tiere ausgeübten Druckes gegen die Schwinge 3 bedarf, um diese aus ihrer normalen Pendellage soweit seitlich zu verschwenken, daß über die Finger 6 das Schlauchstück 13 eine den Öffnungsdorn 12 aus seiner Schließstellung verschwenkende Auslenkung des Schlauchstücks 13 erfolgt und damit Wasser aus dem Ventil 2 in den Trog 1 strömen kann. Sobald dieser Betätigungsdruck auf die Schwinge 3 aufhört, schwenkt diese in ihre vertikal ausgerichtete Pendel-Ruhestellung zurück, womit auch das Schlauchstück 13, bedingt durch seine Eigenelastizität, und damit auch der Ventil-Öffnungsdorn 12 wieder in ihre Ruhe- bzw. Schließlage zurückfedern. Durch die Länge der Schlauchstücke 13 ergibt sich ein sehr geräuscharmer und blasenfreier Wassereintritt in den Trog.

Wenngleich das in der Zeichnung dargestellte und vorstehend beschriebene Ausführungsbeispiel als besonders vorteilhafte Ausführungsform anzusehen ist, ist der Gegenstand der Erfindung hierauf nicht beschränkt. Vielmehr sind im Rahmen der Patentansprüche, insbesondere der Ansprüche 1 oder 2, auch anderweitige Ausgestaltungen bzw. Modifikationen ohne weiteres denkbar und möglich. So können statt des einen Ventils 2 auch zwei oder mehrere solcher Ventile im Wassertrog 1 angeordnet sein, in Verbindung mit an der Schwinge 3 entsprechend angebrachten Ventil-Betätigungsgliedern 6. Die Ventil-Betätigungsglieder 6 müssen auch nicht, wie dargestellt, beidseitig in bezug auf die Schlauchstücke 13 angebracht sein, so daß sowohl ein Auslenken der Schwinge 3 nach links oder rechts zum Öffnen des Ventils 2 (oder der Ventile) führt, es genügt vielmehr auch, die Ventil-Betätigungsglieder 6 an der Unterseite der Schwinge 3 nur einseitig anzubringen, beispielsweise nur an der der zugehörigen Stalleinrichtung zugewandten Seite, so daß nur ein Ausschwenken der Schwinge in Richtung von der Stalleinrichtung weg nach vorne zur Ventilöffnung führt. Auch eine in bezug auf die Längsmittelachse des Wassertrogs 1 außermittige Aufhängung der Schwinge ist, gegebenenfalls in Verbindung mit der zuvor angesprochenen einseitigen Anbringung der Ventil-Betätigungsglieder 6, möglich und unter Umständen vorteilhaft. Schließlich ist es auch möglich, das (oder die) Ventil(e) im Bereich der Seitenwände des Trogs 1 statt am Trogboden 1' anzubringen; in diesem Fall bedürfte es lediglich einer etwas anders gestalteten Querschnittsform der Schwinge 3, wie überhaupt die Formgebung der Schwinge und deren Lagerung in Abweichung vom dargestellten Ausführungsbeispiel in weiten Bereichen variieren können.

**Patentansprüche**

1. Selbsttränkevorrichtung für Stalleinrichtungen auf Seeschiffen, bestehend aus einem langgestreckten, für mehrere Tiere geeigneten Wassertrog (1) mit einem ein schmales Rechteck beschreibenden Grundriß, welcher Wassertrog (1) im Innern mit zumindest einem an eine Druckwasserleitung angeschlossenen Ventil (2) und einem Betätigungsorgan zum Öffnen des Ventils (2) versehen ist, dadurch gekennzeichnet, daß das Betätigungsorgan als eine den Wassertrog (1) in Längsrichtung durchziehende, an den beiden Schmalseiten des Troges schwenkbeweglich gelagerte Schwinge (3) ausgebildet ist, und daß Mittel vorgesehen sind, die auf die Schwinge (3) wirken, um auch bei einem Verschwenken des Wassertrogs (1) um bis zu 45° ohne Aufbringung einer äußeren Kraft ein Öffnen des Ventils (2) zu verhindern.

2. Selbsttränkevorrichtung nach Anspruch 1, dadurch gekennzeichnet, daß die Schwinge (3) als aushebbar aufgehängte Pendelschwinge ausgebildet ist.

3. Selbsttränkevorrichtung nach Anspruch 1 oder 2, dadurch gekennzeichnet, daß die Schwinge (3) einen Hohlraum ausbildet, in dem das (oder die) am Trogboden vorgesehene(n) Ventil(e) (2) verdeckt aufgenommen sind.

4. Selbsttränkevorrichtung nach Anspruch 3, dadurch gekennzeichnet, daß die Schwinge (3) als eine im Querschnitt nach oben gewölbte Rinne mit an ihrer Unterseite hängend vorgesehenen Ventil-Betätigungsgliedern (6) ausgebildet ist.

5. Selbsttränkevorrichtung nach einem oder mehreren der vorhergehenden Ansprüche, dadurch gekennzeichnet, daß das (oder die) Ventil(e) (2) mit sich horizontal erstreckenden Auslaßstutzen (11) und mit daraus vorstehenden und von elastischen Schlauchstücken (13) übergriffenen Öffnungsdornen (12) versehen ist (sind), die bei seitlicher Auslenkung das Ventil (2) öffnen, daß die Länge und Steifigkeit der elastischen Schlauchstücke (13), der Anbringungspunkt der Ventil-Betätigungsglieder (6) an der Schwinge (3) und deren Gewicht insgesamt so aufeinander abgestimmt sind, daß eine Auslenkung der Schlauchstücke (13) und damit der Ventil-Öffnungsdorne (12) erst bei einer auf die Pendelschwinge (3) ausgeübten äußeren Kraft erfolgt, die größer ist als die bei einer Verschwenkung der Schwinge um bis zu 45° sich ergebende Pendelrückstellkraft.

## Claims

1. An automatic drinking device for livestock quarters on ocean-going ships, consisting of an elongated water trough (1) suitable for a plurality of animals and having an outline describing a narrow rectangle in plan view, which water trough (1) is provided, in the interior, with at least one valve (2) connected to pressure water piping and an actuating member to open the valve (2), characterised in that the actuating member is constructed in the form of a rocker which passes through the water trough (1) in the longitudinal direction and is mounted at the two narrow sides of the trough for pivotal motion, and that means are provided which act on the rocker (3) to prevent opening of the valve (2) without the application of an external force even on pivoting of the water trough (1) through up to 45°.

2. An automatic drinking device according to claim 1, characterised in that the rocker (3) is constructed in the form of a pendulum rocker which is suspended in such a manner that it can be lifted out.

3. An automatic drinking device according to claim 1 or 2, characterised in that the rocker (3) forms a cavity in which the valve (or valves) (2) provided at the bottom of the trough are received in a concealed manner.

4. An automatic drinking device according to claim 3, characterised in that the rocker (3) is constructed in the form of a channel curved upwards in cross-section with valve actuating members (6) provided hanging at its under side.

5. An automatic drinking device according to any one or more of the preceding claims, characterized in that the valve (or valves) (2) is (are) provided with outlet nozzles (11) extending horizontally and with opening pins (12) projecting out of the latter and engaged over by resilient pieces of hose (13), which pins open the valve (2) on lateral deflection, and in that the length and stiffness of the resilient pieces of hose (13), the point where the valve actuating members (6) are fitted to the rocker (3), and their weight are adapted to one another as a whole so that a deflection of the pieces of hose (13) and hence of the valve opening pins (12) is effected only when an external force which is greater than the pendulum restoring force resulting on pivoting of the rocker through up to 45° is exerted on the pendulum rocker (3).

## Revendications

1. Abreuvoir automatique pour stabulation sur des navires, constitué d'une auge (1) oblongue convenant pour plusieurs animaux, dont le plan de projection décrit un rectangle étroit, et qui est pourvue intérieurement d'au moins une valve (2) raccordée à une conduite d'eau sous pression et d'un organe d'actionnement destiné à ouvrir la valve (2), caractérisé en ce que l'organe d'actionnement a la forme d'un élément oscillant (3) s'étendant sur toute la longueur de l'auge (1) et monté pivotant dans les deux petits côtés de l'auge, et que des moyens sont prévus pour agir sur l'élément oscillant (3) en vue d'empêcher l'ouverture de la valve (2) sans intervention d'une force extérieure, même en cas d'inclinaison de l'auge (1) d'un angle pouvant aller jusqu'à 45°.

2. Abreuvoir automatique suivant la revendication 2, caractérisé en ce que l'élément oscillant (3) a la forme d'un élément oscillant pendulaire suspendu pouvant être enlevé par le haut.

3. Abreuvoir automatique suivant la revendication 1 ou 2, caractérisé en ce que l'élément oscillant (3) forme un espace creux dans lequel la ou les valves (2) prévues au fond de l'auge sont logées et abritées.

4. Abreuvoir automatique suivant la revendication 3, caractérisé en ce que l'élément oscillant a la forme d'un chenal convexe vers le haut, en coupe, à la partie inférieure duquel sont prévus des organes d'actionnement de valve (6) suspendus.

5. Abreuvoir automatique suivant une ou plusieurs des revendications précédentes, caractérisé en ce que la ou les valves sont pourvues de tubulures de sortie (11) s'étendant horizontalement, dont dépassent des broches d'ouverture (12) qui sont entourées par des sections de tuyau souple élastique (13) et qui ouvrent les valves (2) lorsqu'elles sont déplacées latéralement, que la longueur et la raideur des sections de tuyau souple élastique (13), le point de montage des organes d'actionnement de valve (6) sur l'élément oscillant (3) et leur poids pris dans l'ensemble, sont mutuellement adaptés pour qu'un déplacement des sections de tuyau souple (13) et donc des broches d'ouverture de valve (12) n'ait lieu que lorsqu'une force extérieure, qui est supérieure à la force de rappel pendulaire résultant d'un pivotement de l'élément oscillant de 45° au maximum, est exercée sur l'élément oscillant pendulaire (3).

_Fig.1_

_Fig. 2_

_Fig. 3_